# EUROPEAN PATENT SPECIFICATION

(11) **EP 2 579 546 B1**
(45) Date of publication and mention of the grant of the patent: **25.05.2016**
(21) Application number: 11306229.3
(22) Date of filing: 27.09.2011
(51) Int. Cl.: H04L 29/14, H04L 29/08, G06F 11/00, H04L 12/24, G06F 11/07, H04L 12/70

(54) **Method of failure detection in an operating system**
Verfahren zur Fehlererkennung in einem Betriebssystem
Procédé de détection de défaillances dans un système d'exploitation

(43) Date of publication of application: 10.04.2013
(73) Proprietor: ALCATEL LUCENT, 92100 Boulogne-Billancourt (FR)
(72) Inventor: Mullender, Sape, 1017 KA Amsterdam (NL)
(74) Representative: ALU Antw Patent Attorneys

(56) References cited:
- US-A1- 2009 055 501
- US-B2- 6 874 106
- US-B2- 7 337 234

## Description

### Field of the Invention

The invention relates to a method of failure detection in an operating system.

### Background

This section introduces aspects that may be helpful in facilitating a better understanding of the invention. Accordingly, the statements of this section are to be read in this light and are not to be understood as admissions about what is in the prior art or what is not in the prior art.

Many systems use request/reply for communicating between processes (threads, tasks, operating system cores, applications, servers). One entity which we call client sends a request to another entity which we call server; the server carries out (processes, executes) the request and returns a reply to the client. The process of sending/receiving a request followed by sending/receiving the reply is sometimes called a message transaction. The use of message transactions is widespread in operating systems, computer networks and distributed systems.

When message transactions involve communication over a network in which data packets may be lost, or address remote servers whose reliability is not guaranteed, mechanisms need to be used to make them more reliable. A particular concern is that a client sends a request and waits for a reply that never arrives due to packet loss or server crash.

It is this problem of dependably notifying clients of server crashes or packet loss that this invention addresses. It does so in the particular context of an individual computer, the operating system running on it and the applications supported by that operating system. In this context, the general solution (timeout and retransmission, presented in the following section) tends to be too complex to be effective in the setting of high-speed, intra-computer communication.

To deal with the problems caused by packet loss and server crashes, clients and servers typically use the mechanism of timeout and retransmission: When a client sends a request, it starts a timer. When it receives a reply, it cancels the timer. If the timer goes off, the client retransmits the request. When a server receives a retransmitted request, there are three possibilities:
1. The server did not get the original request
2. The server is still processing the original request
3. The server had already sent the reply to the original request

In case 1, the server can start carrying out the retransmitted request. In case 1 and 2, the server can send an acknowledgement back to the client with the meaning "I'm working on your request". In case 3, the server should retransmit the reply. There is a fourth possibility and that is that the server has crashed. In this case, the client may receive a failure-to-deliver notice from the system, or the client gives up after a number of unsuccessful retransmissions.

A popular development is to use Content Routing, a technique where a client specifies the name of the object it is looking for (this could be a movie, a web page, a service, a device) and leaves it to the system to find an appropriate server to deliver the request to. Often, finding such a server is a process of gradual refinement, for example, the request is first delivered to the organization that owns the content, then to a data centre that belongs to the organization, then to a specific host in the data centre and then to a server process running on that host. The request gets routed in multiple places, until it finally gets to its destination.

A particular strategy for content routing is presented by Content-Centric Networking, CCN , an idea developed by Van Jacobson and others at PARC. In CCN, a request is called an Interest and a reply is called a Content message. Interests have a hierarchical path name, e.g., com/parc/papers/ccn.pdf which is routed to its destination (e.g., first to parc.com and then to the server that manages papers). These Interests are stored at each of the routers en route to the Interest's destination where they await the return of the matching Content message. Interests can be combined and Content messages can be cached, but this particular aspect of CCN is not important here.

Inside an individual computer, communication is generally implemented in a way that requests and replies do not get lost. It is, however, possible that applications configured as clients or servers crash. In that case, the client must either find out about the crash by using timeout, or it needs to be notified by the system. Server crashes are rare events, but they do happen and timeout is an expensive tool that needs to be started up on every message transaction, but is very rarely called upon to recover from potential client deadlock.

Patent document US2009/055501 is considered to be the closest prior art.

### Summary

The invention is defined in independent claims 1, 13 and 14.

In one embodiment of the present invention, an approach to failure detection in an operating system is disclosed which may allow for improved effectiveness and efficiency.

A method of failure detection in an operating system according to the embodiment comprises sending a request from a client to a server through a router, storing a token at the router, carrying out the request at the server, and returning a reply from the server to the client through the router, as well as the alternative steps of, in response to a failure in the server, generating at the router an error reply based on the token and returning the error reply from the router to the client.

In another embodiment of the invention, an efficient mechanism is disclosed to keep track of client/server associations during message transactions so that clients can be notified of server crashes.

In yet another embodiment of the invention, a mechanism is disclosed that allows the handling of timeout and retransmission for all applications that run on an operating system and use the network, in just one place, close to, or at the network interface.

The basic idea is that, when a request is routed from client to server, at each routing point in the path, a small token is stored. When the server sends the reply, these tokens can be used to point the way back to the client. They are also removed as the reply passes the routing points. An arrangement is made that, if a server crashes, the router that supplies that server with requests is notified. The router uses the tokens that identify outstanding requests for that server to generate special error replies and returns these back to the clients.

At the network interface, a special interface router receives the requests that come in from the network. For each request, it generates a token before forwarding the request to servers inside the computer. A request generated inside the computer will be routed via the interface router and this router will also store a token for such requests before forwarding them into the network.

The interface router can deal with incoming retransmissions and sets retransmission timers for outgoing requests. In fact, it uses the conventional timeout and retransmission method on behalf of servers and clients inside the computer. This enormously simplifies the management of server and client processes in an operating system, because there need be only one place where timers and retransmissions are handled. The interface router can also cache outgoing requests and replies to satisfy retransmission requests autonomously.

Further embodiments of the invention can be gathered from the following entirety of the herein application.

### Description of the Embodiments

The mechanism of the invention is inspired by CCN and virtual-circuit identifiers in ATM networks, but serves a completely different purpose: creating reliable communication.

The main embodiment assumes that each router communicates with at most N other entities - routers or processes (clients or servers) - and that it will learn of crashes in these entities. We'll call the direct connection between entities (routers, clients, servers) a link. A router, thus, has at most N links. We assume that, on each link, a router can have at most M outstanding requests.

This implies that a router, for each link, can keep a table of at most M tokens. An entry into this table can be indexed by a non-negative number less than M. We call such an index a tag. A tag is a number between 0 and M-1.

Requests and replies carry tags. On a particular link, the tag of a reply matches that in the associated request.

A router executes the following algorithm:
- When a request with tag m arrives on link n, a token t is created that contains m and n. We'll indicate this by t = (n, m). The router then makes a routing decision (how this is done is not part of the invention) to forward the request on outgoing link n'. It finds an unused entry m' in the token table associated with link n', puts t into that entry, substitutes m' for m in the request and forwards the request on link n'. In the absence of crashes, a reply will arrive on link n' with tag m'.
- When a reply with tag m' arrives on link n', the router finds the m'th token t = (n, m) in the token table for link n', and uses that to substitute token m for m' in the reply and to forward the modified reply on link n. It then marks the m'th token in the token table for link n' as unused.

- When the entity on the other end of link n' crashes, the router is notified. For each token t = (n, m) in the token table for link n', it generates a crash-notification reply, tags it with m and sends it out on link n.
- When a request arrives to be forwarded to a crashed or no-longer-existent link, a no-such-destination reply with the incoming request's tag is generated and returned on the link of the incoming request.

The tag-substitution technique was used in ATM networks to forward very small messages in a virtual circuit identified by those tags (called virtual-circuit identifiers there).

The idea of requests leaving a trail of tokens behind on their way to their destination is used in CCN networks as a mechanism to allow caching and multicasting content at routers.

They form similar mechanisms for a completely different purpose.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods.

The description merely illustrates the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method of notifying a client process of the detection of a failure of a server process, said detection being carried out in an operating system of an individual computer, the method comprising:
- sending a request from the client process to the server process through a router,
- storing a token at the router, and
- in the absence of failure in the server process, carrying out the request at the server process, and returning a reply from the server process to the client process through the router, or
- in response to a failure in the server process, generating at the router an error reply based on the token and returning the error reply from the router to the client process,
**characterized in that** said client process, said server process and said router are inside said computer.

2. Method as in claim 1 comprising removing the token as the reply passes the router.

3. Method as in claim 1 or 2 comprising notifying the router of the failure in the server process, by the operating system.

4. Method as in any of the preceding claims wherein the operating system comprises a network interface, the method comprising :
- receiving a second request at an interface router associated with the network interface, and
- storing a second token for the second request at the interface router.

5. Method as in claim 4 comprising handling a retransmission of the second request at the interface router.

6. Method as in any of claims 1 to 3 wherein the operating system comprises a network interface, the method comprising:
- generating a second request inside the computer,
- routing said second request by an interface router associated with the network interface, and
- storing a second token for the second request at the interface router.

7. Method as in claim 6 comprising setting a retransmission timer at the interface router.

8. Method as in claim 6 or 7 comprising caching the second request.

9. Method as in any of the preceding claims wherein the router is configured to connect through a plurality of links, wherein the router is connected to the client process by a first link of the plurality of links and the router is connected to the server process by a second link of the plurality of links.

10. Method as in claim 9 comprising maintaining at the router for each link of the plurality of links a table of tokens, each token associated with at least one request of a plurality of requests.

11. Method as in claim 10 wherein each entry in the table is associated with an index, wherein the request and the reply carry the index.

12. Method as in any of the preceding claims wherein the failure in the server process takes the form of a crash of the server process.

13. A program storage device readable by a machine, tangibly embodying a program of instructions executable by the machine to perform a method according to any of claims 1 to 12.

14. A computer program product comprising computer-executable instructions for performing a method according to any of claims 1 to 12 when the program is run on a computer.

## Patentansprüche

1. Verfahren zum Benachrichtigen eines Client-Prozesses von der Erkennung eines Fehlers eines Server-Prozesses, wobei besagte Erkennung in einem Betriebssystem eines Einzelcomputers durchgeführt wird, wobei das Verfahren Folgendes umfasst:
- Senden einer Anfrage vom Client-Prozess an den Server-Prozess über einen Router,
- Speichern eines Tokens am Router, und
- bei Nichtvorhandensein eines Fehlers im Server-Prozess, Durchführen der Anfrage am Server-Prozess und Zurücksenden einer Antwort vom Server-Prozess an den Client-Prozess über den Router, oder
- als Antwort auf einen Fehler im Server-Prozess, Generieren einer Fehlerantwort am Router basierend auf dem Token und Zurücksenden der Fehlerantwort vom Router an den Client-Prozess,
**dadurch gekennzeichnet, dass** sich besagter Client-Prozess, besagter Server-Prozess und besagter Router innerhalb des besagten Computers befinden.

2. Verfahren nach Anspruch 1, umfassend das Entfernen des Tokens, wenn die Antwort den Router passiert.

3. Verfahren nach Anspruch 1 oder 2, umfassend das Benachrichtigen des Routers, durch das Betriebssystem, vom Fehler im Server-Prozess.

4. Verfahren nach einem beliebigen der vorstehenden Ansprüche, wobei das Betriebssystem eine Netzwerkschnittstelle umfasst, wobei das Verfahren Folgendes umfasst:
- Empfangen einer zweiten Anfrage an einem Schnittstellenrouter, welcher der Netzwerkschnittstelle zugeordnet ist, und
- Speichern eines zweiten Tokens für die zweite Anfrage am Schnittstellenrouter.

5. Verfahren nach Anspruch 4, umfassend das Handhaben einer Weiterleitung der zweiten Anfrage am Schnittstellenrouter.

6. Verfahren nach einem beliebigen der Ansprüche 1 bis 3, wobei das Betriebssystem eine Netzwerkschnittstelle umfasst, wobei das Verfahren Folgendes umfasst:
- Generieren einer zweiten Anfrage innerhalb des Computers,
- Routen der besagten zweiten Anfrage durch einen Schnittstellenrouter, welcher der Netzwerkschnittstelle zugeordnet ist, und
- Speichern eines zweiten Tokens für die zweite Anfrage am Schnittstellenrouter.

7. Verfahren nach Anspruch 6, umfassend das Einrichten eines Weiterleitungszeitgebers am Schnittstellenrouter.

8. Verfahren nach Anspruch 6 oder 7, umfassend das Zwischenspeichern der zweiten Anfrage.

9. Verfahren nach einem beliebigen der vorstehenden Ansprüche, wobei der Router ausgelegt ist, um sich über eine Vielzahl von Verbindungen zu verbinden, wobei der Router mit dem Client-Prozess durch eine erste Verbindung von der Vielzahl von Verbindungen verbunden ist und der Router mit dem Server-Prozess durch eine zweite Verbindung von der Vielzahl von Verbindungen verbunden ist.

10. Verfahren nach Anspruch 9, umfassend das Halten einer Token-Tabelle für jede Verbindung von der Vielzahl von Verbindungen am Router, wobei jedes Token mindestens einer Anfrage von einer Vielzahl von Anfragen zugeordnet ist.

11. Verfahren nach Anspruch 10, wobei jeder Eintrag in der Tabelle einem Index zugeordnet ist, wobei die Anfrage und die Antwort den Index tragen.

12. Verfahren nach einem beliebigen der vorstehenden Ansprüche, wobei der Fehler im Server-Prozess die Form eines Absturzes des Server-Prozesses annimmt.

13. Maschinenlesbare Programmspeichervorrichtung, die konkret ein Programm von Befehlen enthält, die von der Maschine ausführbar sind, um ein Verfahren nach einem beliebigen der Ansprüche 1 bis 12 durchzuführen.

14. Computerprogrammprodukt, umfassend computerausführbare Befehle zum Durchführen eines Verfahrens nach einem beliebigen der Ansprüche 1 bis 12, wenn das Programm auf einem Computer gestartet wird.

## Revendications

1. Procédé de notification d'un processus client de la détection d'une défaillance d'un processus serveur, ladite détection étant exécutée dans un système d'exploitation d'un ordinateur individuel, le procédé comprenant les étapes suivantes :
- envoyer une demande depuis le processus client vers le processus serveur par l'intermédiaire d'un routeur,
- stocker un jeton au niveau du routeur, et
- en l'absence de défaillance dans le processus serveur, exécuter la demande au niveau du processus serveur et renvoyer une réponse depuis le processus serveur vers le processus client par l'intermédiaire du routeur, ou
- en réponse à une défaillance dans le processus serveur, générer au niveau du routeur une réponse d'erreur basée sur le jeton et renvoyer la réponse d'erreur depuis le routeur vers le processus client,
**caractérisé en ce que** ledit processus client, ledit processus serveur et ledit routeur sont à l'intérieur dudit ordinateur.

2. Procédé selon la revendication 1 comprenant le retrait du jeton lorsque la réponse traverse le routeur.

3. Procédé selon la revendication 1 ou 2 consistant à notifier le routeur de la défaillance dans le processus serveur, au moyen du système d'exploitation.

4. Procédé selon l'une quelconque des revendications précédentes dans lequel le système d'exploitation comprend une interface de réseau, le procédé comprenant les étapes suivantes :
- recevoir une deuxième demande au niveau d'un routeur de l'interface associé à l'interface de réseau, et
- stocker un deuxième jeton pour la deuxième demande au niveau du routeur de l'interface.

5. Procédé selon la revendication 4 comprenant le traitement d'une retransmission de la deuxième demande au niveau du routeur de l'interface.

6. Procédé selon l'une quelconque des revendications 1 à 3 dans lequel le système d'exploitation comprend une interface de réseau, le procédé comprenant les étapes suivantes :
- générer une deuxième demande à l'intérieur de l'ordinateur,
- acheminer ladite deuxième demande au moyen d'un routeur de l'interface associé à l'interface de réseau, et
- stocker un deuxième jeton pour la deuxième demande au niveau du routeur de l'interface.

7. Procédé selon la revendication 6 comprenant le réglage d'un temporisateur de retransmission au niveau du routeur de l'interface.

8. Procédé selon la revendication 6 ou 7 comprenant la mise en antémémoire de la deuxième demande.

9. Procédé selon l'une quelconque des revendications précédentes, dans lequel le routeur est configuré pour se connecter par l'intermédiaire d'une pluralité de liaisons, dans lequel le routeur est connecté au processus client au moyen d'une première liaison parmi la pluralité de liaisons et le routeur est connecté au processus serveur au moyen d'une deuxième liaison parmi la pluralité de liaisons.

10. Procédé selon la revendication 9 comprenant le maintien au niveau du routeur pour chaque liaison parmi la pluralité de liaisons d'un tableau de jetons, chaque jeton étant associé à au moins une demande parmi la pluralité de demandes.

11. Procédé selon la revendication 10 dans lequel chaque entrée dans le tableau est associée à un indice, dans lequel la demande et la réponse transportent l'indice.

12. Procédé selon l'une quelconque des revendications précédentes dans lequel la défaillance dans le processus serveur se présente sous la forme d'un plantage du processus serveur.

13. Dispositif de stockage de programme lisible par une machine, mettant concrètement en oeuvre un programme d'instructions exécutables par la machine pour exécuter un procédé selon l'une quelconque des revendications 1 à 12.

14. Produit de programme informatique comprenant des instructions exécutables par un ordinateur pour exécuter un procédé selon l'une quelconque des revendications 1 à 12 lorsque le programme est exécuté sur un ordinateur.
